# EUROPEAN PATENT APPLICATION

(11) **EP 4 286 897 A1**
(43) Date of publication of application: **06.12.2023**
(21) Application number: 22176789.0
(22) Date of filing: 01.06.2022
(51) Int. Cl.: G01S 19/39, G01S 19/42, G01S 19/09

(54) **METHOD AND SYSTEM TO PROVIDE AN ESTIMATED FUTURE POSITION OF A VEHICLE**

(71) Applicant: Valeo Internal Automotive Software Egypt, a limited liability company, Giza, Cairo (EG)
(72) Inventor: LEJAY, Frédéric, Giza, Cairo (EG); RADWAN, Mohamed, Giza, Cairo (EG); HATHOUT, Yasmin, Giza, Cairo (EG); WEBER, Klaus, Giza, Cairo (EG)
(74) Representative: Hofstetter, Schurack & Partner

(57) **Abstract**

Method and system (1) to provide an estimated future position of a vehicle (2). The method comprises providing (S2) at least one position information (10), which describes a current and/or previous position of the vehicle (2), for an external processing device (3). It also comprises determining (S6) at least one future position information (19), which describes the estimated future position of the vehicle (2), by applying a position determination algorithm (18) on the provided at least one position information (10) by means of the external processing device (3). Furthermore, the method comprises providing (S7) the determined at least one future position information (19) for the vehicle (2).

## Description

The invention relates to a method and a system to provide an estimated future position of a vehicle.

A vehicle may comprise a positioning device configured to determine a position of the vehicle. The positioning device determines, for example, the position based on data provided by a global navigation satellite system (GNSS). The determined position of the vehicle may be required by a driver assistance system or another application of the vehicle, for example, an emergency call function, an intelligent speed assist, or another remote service for the vehicle. However, positioning a vehicle based on GNSS data can result in position data that is not accurate enough for a corresponding requirement of the driver assistance system or the other application.

US 10,849,093 B2 discloses a positioning system including an autonomous driving car used as a dynamic reference station to provide data required for real-time kinematic position correction. The real-time kinematic position correction provides real-time kinematic position correction data received by an end user.

Real-time kinematic position correction data only provide a correction mechanism for the positioning device of the vehicle. Such correction data can hence not improve GNSS-based positioning whenever GNSS data is, for example, temporarily unavailable or inaccurate due to an obstacle such as a dense tree cover, an urban canyon, or a tunnel.

It is an object of the invention to provide precise position data even if positioning based on global navigation satellite system data is temporarily unavailable.

The object is solved by the independent claims.

A first aspect of the invention relates to a method to provide an estimated future position of the vehicle. The future position of the vehicle is a position that the vehicle has not yet taken. The future position is hence a point on an estimated trajectory along which the vehicle is expected to travel. The estimated future position can alternatively be referred to as an approximated or predicted position.

The inventive method is based on the observation that in case of unavailable or inaccurate positioning data provided by a global navigation satellite system (GNSS), a processing unit of the vehicle typically performs an estimation of the future position. The estimation may comprise evaluation of odometry data of the vehicle. Such an estimation may be referred to as dead-reckoning solution. Alternatively or additionally, the estimation may comprise map matching based on a map stored in the vehicle. However, a quality of a vehicle sensor information provided by a sensor of the vehicle to calculate the estimated future position may limit the result of the estimation. Based on the vehicle sensor information, the estimation typically comprises evaluating a vehicle speed and/or a direction of the vehicle, for example, described by a steering angle of the vehicle. In this context, estimating the direction of the vehicle is particularly challenging and can lead to significant errors when integrating over a long period of time. Furthermore, map matching requires navigation system information provided by an on-board function of the vehicle such as on-board map and processing capability to perform map matching. Neither a navigation system nor enough processing capability to perform the map matching may be available in the vehicle. Hence, a solution should be provided that is independent of the processing capability of the vehicle and an on-board navigation system. Furthermore, the desired method should be accurate and hence be based on a detailed estimation algorithm that can be carried out by a processing unit.

The method comprises providing at least one position information for an external processing device. The external processing device is, for example, a server or a cloud server. The position information describes a current and/or a previous position of the vehicle. Preferably, the at least one position information is the latest position determined for the vehicle, for example, by the vehicle itself. The position information may comprise position data such as, for example, coordinates. The external processing device is a device located outside of the vehicle for which the position information is provided. The external processing device preferably receives the provided position information via a communication connection. In other words, the position information is preferably sent or transmitted to the external processing device. The communication connection is preferably wireless, particularly cable-free. If a positioning device provides the position information, the communication connection connects a communication interface of the positioning device or the communication interface of another device comprising the positioning device to a communication interface of the external processing device. The communication connection is provided, for example, via a wireless local area network (WLAN), a Bluetooth connection and/or a mobile data network, for example based on the Long Term Evolution (LTE), Long Term Evolution Advanced (LTE-A), Fifth Generation (5G) or Sixth Generation (6G) mobile radio standard.

The method furthermore comprises determining at least one future position information by applying a position determination algorithm on the provided at least one position information. The external processing device performs the determination. The future position information describes the estimated future position of the vehicle. By determining at least one future position information, there is hence at least one future position determined, meaning at least one position at which the vehicle is expected to be located in the future. The position determination algorithm can comprise at least one instruction which cause the external processing device if the instruction is carried out to determine the at least one future position information. The position determination algorithm can be part of a computer program. The position determination algorithm can be based on an algorithm configured to perform the above-mentioned dead-reckoning solution and/or map matching to estimate the at least one future position of a vehicle.

The method comprises providing the determined at least one future position information for the vehicle. Preferably, the determined at least one future position information is sent and/or transmitted from the external processing device via a communication connection between the communication interface of the external processing device to a communication interface of the vehicle.

In summary, the method comprises estimating a prospective position of a vehicle by an external processing device based on a current and/or previous position of the vehicle and sharing the information on the estimated prospective position with the vehicle. Therefore, the vehicle itself requires no processing capabilities to perform the dead-reckoning solution and/or map matching to be able to, for example, operate a vehicle function that requires a position information even when GNSS based positioning is unavailable or inaccurate. Besides, the vehicle requires no stored map data and hence no on-board navigation system to provide the future position information for such a vehicle function. In other words, the method is based on a cloud-based solution performed in a server, meaning the external processing device, to estimate the possible upcoming position of the vehicle, meaning the future position. As a result, the position determination by an on-board positioning device of the vehicle may be improved compared to a position determination performed by the vehicle alone. It is thus achieved to provide precise position data even if positioning based on GNSS data is temporarily unavailable.

An embodiment comprises that the vehicle determines the provided at least one position information by means of a positioning device of the vehicle. It is hence intended that the vehicle itself provides the at least one position information for the external processing device. Therefore, it is, for example, possible to control when the at least one position information is provided for the external processing device by the vehicle because, for example, it can only provide the at least one position information if it requires the determination of the at least one future position information by the external processing device. This also allows a direct or indirect communication connection between the vehicle and the external processing device for both providing the position information and the determined at least one future position information. Due to this, providing the determined future position information to the wrong vehicle is very unlikely and the method hence particularly reliable.

Besides, an embodiment comprises that the positioning performed by the positioning device is only GNSS data provided by GNSS. The GNSS may be the global positioning system (GPS) or any other GNSS. Such a positioning is hence independent of a navigation system or any map information stored in or provided for the vehicle. Preferably, the positioning device does not depend on using odometry data from an odometer or any other sensor of the vehicle to provide the position information. The positioning device comprised by the vehicle can hence be a relatively simple positioning system that, for example, is not configured to perform an algorithm to estimate a future position of the vehicle. The technical requirements for the positioning device of the vehicle are thus low so that the method is widely applicable by vehicles.

Moreover, an embodiment comprises providing the position information regularly. In particular, it is provided in predetermined time and/or distance intervals. It is hence possible that, for example, the vehicle continuously sends its current and/or previously determined position information to the external processing device. The time interval may comprise 1 second, 3 seconds, 5 seconds, 10 seconds, 30 seconds, 1 minute, 5 minutes, 10 minutes, or in particular 1 hour. The distance interval may comprise 100 meter, 200 meter, 300 meter, 500 meter, 1 kilometer, 5 kilometer, or in particular 10 kilometer. The interval can be any interval between the corresponding values. If the position information is provided regularly, the provided at least one future position information may as well be evaluated and provided regularly. Therefore, there is always estimated future position information available for the vehicle independent of the quality of the GNSS data received by the vehicle. Any function of the vehicle that depends on a current position information can hence remain active without risking any internal disruptions due to temporally missing GNSS data because the external processing device regularly provides the estimated future position information.

In an alternative embodiment, the method comprises providing the position information request-based. In particular, the position information is provided when detecting a request information. The request information describes a request for the at least one future position information. In other words, the position information can be provided even-based to the external processing device. If, for example, the vehicle detects continuously the GNSS data but suddenly GNSS data is unavailable, for example, due to driving through a tunnel, the vehicle may detect the unavailability of GNSS data and a request information is provided that indicates the current request for position information. Once the request information is provided, for example, the last position information, that has been determined before GNSS data became unavailable, may be provided to the external processing device. This reduces communication capacities because the external processing device only receives the position information, if the future position information is actually required by the vehicle. This is particularly economical.

Furthermore, an embodiment comprises providing the request information when a quality information is beyond a quality information range. The quality information describes a quality of the provided at least one position information. The quality information hence quantifies an accuracy and/or availability of the position information. In case of unavailable or inaccurate GNSS data, the quality information is typically beyond the quality information range. The quality information range is a preset range of quality information values that specifies the range of quality, which is sufficiently good so that no future position information is required. This means that once the quality information is within the quality information range, there is, for example, available GNSS data, meaning that, for example, GNSS data reception is sufficiently good for determining the position of the vehicle and/or is available without interruption. If, however, the GNSS data is received with interruptions or with a particularly low transmission intensity, the quality information is beyond the quality information range. It is, hence, particularly simple to verify, if request-based providing of the position information is reasonable or not due to described quality check.

A further embodiment comprises determining the quality information based on a GNSS coverage and/or a performance of a vehicle-internal future position estimation performed by a processing unit of the vehicle. This means that if the coverage of the GNSS data is, for example, low and/or interrupted, the value of the quality information is, for example, also low and therefore beyond the quality information range. Furthermore, it is possible that the vehicle does comprise an algorithm to estimate a future position information, for example, based on the dead-reckoning solution and/or map matching. If this is the case, it is still possible that, for example, due to inaccurate or unavailable odometry signals and/or low quality map data and/or low processing capabilities, the estimation performed by the vehicle itself regarding the future position is of insufficient quality, meaning of a quality beyond the quality information range. If this is the case, the vehicle may ask request-based for future position information from the external processing device. This provides a very accurate procedure to make sure that the future position information is only provided from the external processing device if necessary.

Besides, according to an embodiment the method comprises no position information for the external processing device when the quality information is within the quality information range. If there is, hence, no specific need for the provided future position information, the determination step as well as the providing step of the future position information performed by the external processing device can be left out. This means that in this case the at least one position information is not provided at all. This results in a particularly economical method because whenever the service of the external processing device to provide the future position information is not required, the corresponding calculations are not even performed in the background.

According to an additional embodiment, the external processing device provides multiple future position information for the vehicle. A number of provided future position information per distance depends on the quality information. In other words, the number of future position information provided for the vehicle only depends on the quality of the GNSS data. Alternatively expressed, the number of provided future position information does not necessarily depend on the request information. The quality information may thus be determined independently to determine how many future positions should be provided to the vehicle. It is hence possible, for example, to provide five future position information per kilometer, if the quality information indicates a relatively high quality, but ten or more future position information per kilometer, if the quality information is in comparison lower. Depending on the quality of the current and/or previous position information provided by the vehicle itself, it is hence possible to set the amount of future position information provided for the vehicle. This results in a particularly adaptive procedure.

Moreover, an embodiment comprises that the external processing device provides multiple future position information for the vehicle, which are distributed over a predetermined distance and/or describe an estimated future trajectory of the vehicle. It is in general possible to have a given number of future position information which are provided by the external processing device. It can be, for example, possible to provide ten future position information per kilometer independent of the quality information or any other determination done by the vehicle and/or the external processing device. It is also possible to determine an estimated trajectory the vehicle follows according to the estimated future position. The trajectory also comprises predictions for an area between the individual future positions according to the future position information. Estimating the future trajectory of the vehicle may be based on at least one algorithm to predict a vehicle's upcoming trajectory based on the at least one position information. The method can thus adapt the number of future position information provided for the vehicle and is therefore particularly versatile applicable.

An embodiment comprises that the position determination algorithm comprises map matching of the provided at least one position information. Furthermore, it comprises determining a most probably vehicle path of the vehicle under consideration of the map matching and a most probable path technique. The most probable path technique can alternatively be referred to as most probable path algorithm. In other words, the external processing device may be a map server that performs the map matching of the current and/or previous vehicle position and by doing so, determines the next position of the vehicle using the most probable path techniques. Therefore, for example, estimating in which direction the vehicle is driving is possible. If there is, for example, only one road with no junctions or turns in an environment of the vehicle, the future position information is most likely a position on that road ahead in driving direction of the vehicle. If, however, there is at least one junction and/or a crossroads along the road on which the vehicle is driving, a probability calculation is performed by applying the position determination algorithm to determine the most probable path of the vehicle and hence to estimate the future position of the vehicle. It is, for example, possible in this example to assume that staying on a main road is more likely than leaving the main road on a crossroad or a junction to a comparably smaller and/or less used road. By doing so, it is possible to estimate the at least one future position of the vehicle. Preferably, the future position of the vehicle is only predicted for the next several hundred meters or the next kilometer in order to reduce a possibility of errors due to misestimation. By relying on already known most probable path techniques, it is ensured that the future position information determined by the external processing device is as accurate as possible.

A further embodiment comprises that the external processing device provides a speed limit information. The speed limit information describes a speed limit at the estimated future position for the vehicle. The speed limit information is preferably provided together with the at least one future position information for the vehicle. The speed limit information is particularly interesting for an intelligent speed assistance or intelligent speed adaptation system. Such a system is a function of the vehicle that provides information on a current speed limit, for example, for a driver of a vehicle. In particular, a vehicle with no navigation system or map data stored may depend on receiving the speed limit information from the external processing device. In such a situation, the external processing device may transmit this information to the vehicle together with the future position information, for example, in a common or in a separate data package. The method hence also provides an advantageous implementation of an intelligent speed assistance for a vehicle.

Moreover, an embodiment comprises that the external processing device determines if the determined at least one future position information corresponds to a position at which a speed limit change occurs compared to the speed limit at the position according to the provided position information. In other words, the method may comprise evaluating, if at any of the determined future positions a speed limit changes. If the speed limit change is determined, the at least one future position information is only provided at the position of the speed limit change. Alternatively or additionally, it can be provided at a predetermined distance to the position of the speed limit change. This means that depending on the speed limit change, an event-based provision of the at least one future position information is possible. The predetermined distance may be, for example, 10 meter, 50 meter, 100 meter, 200 meter, 500 meter, 1 kilometer, 2 kilometer, or in particular 5 kilometer. In this scenario, the vehicle does not receive continuously the future position information but only receives it in connection with the speed limit change. If the vehicle is, for example, driving along a motorway with no junctions or speed limit changes for, for example, 20 kilometer, it is possible to provide the future position information only at or close to the location of the speed change. This is reasonable because until this location, the vehicle cannot leave the motorway. In order to estimate a point in time for providing the future position information together with the speed limit information it may be necessary for the vehicle to provide information on its speed, for example together with the position information and/or continuously. This further economizes the method because the number of provided future position information can be reduced depending on the speed limit change.

According to another embodiment, the vehicle provides a speed information. The speed information describes a current and/or previous speed of the vehicle. Alternatively or additionally, the vehicle provides a direction information, which describes a current and/or previous driving direction of the vehicle. The previous information is preferably the last information determined before determination of the current information. The method comprises determining the at least one future position information considering the provided speed information and/or direction information. In other words, additional data may be provided for the external processing device besides the position information so that a more accurate and precise future position information determination is possible. The position determination algorithm hence performs determining the future position information by being applied on the provided position information as well as the provided speed information and/or direction information. This allows for a more accurate determination of the future position information because, for example, a lane change and/or road change can be indicated, for example, by the direction information. Furthermore, the speed information may help determine on what kind of road the vehicle is driving, if there is, for example, multiple roads are located adjacent to each other, for example, in case of parallel roads. If the vehicle hence drives with a speed typical for the motorway, it can be determined that the vehicle is actually driving on the motorway and not on another adjacent road.

The invention comprises combinations of the described embodiments.

Another aspect of the invention relates to a system. The system comprises a vehicle and an external processing device. The vehicle is configured to provide at least one position information, which describes a current and/or previous position of the vehicle, for the external processing device. The external processing device is configured to determine at least one future position information, which describes the estimated future position of the vehicle, by applying a position determination algorithm on the provided at least one position information. The external processing device is also configured to provide the determined at least one future position information for the vehicle. The system performs the inventive method. The invention also includes further embodiments of the system as already described in connection with the embodiments of the inventive method.

The external processing device and/or the processing unit of the vehicle may comprise one or more microprocessors and/or one or more microcontrollers and/or one or more ASIC (application specific integrated circuit). Further, it may comprise program code that is designed to perform the steps of the method for the external processing device or the processing unit of the vehicle when executed by the processing device or the processing unit, respectively. The program code may be stored in a data storage of the processing device and/or processing unit.

Another aspect of the invention relates to a vehicle. The vehicle is preferably a motor vehicle, such as a passenger car, a truck, a bus or a motor bike. The vehicle comprises a processing unit and, in particular, a positioning device. The vehicle is configured to perform steps of the above-described method to be performed by the vehicle.

Furthermore, an aspect of the invention relates to a computer program product. The computer program is a computer program. The computer program product comprises instructions that, when the program is executed by a computer, such as the processing device, cause the computer to carry out the inventive method.

The figures show in:
- Fig. 1: a schematic representation of a system comprising a vehicle and an external processing device; and
- Fig. 2: a schematic representation of a method to provide an estimated future position of the vehicle.

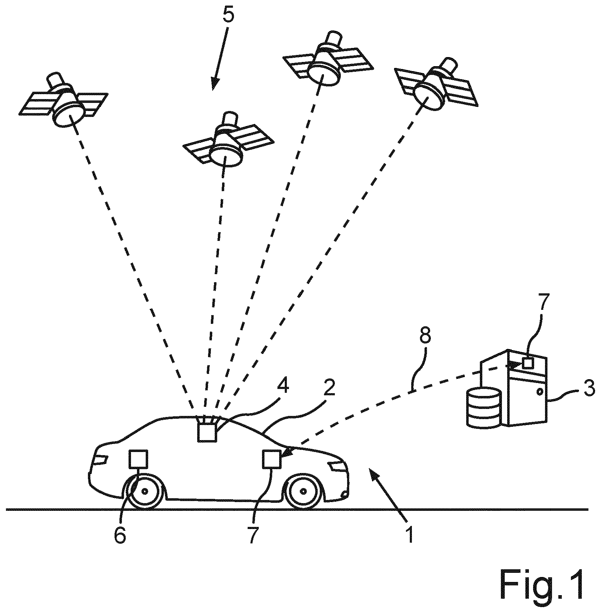

Fig. 1 shows a system 1 comprising a vehicle 2 and an external processing device 3. The vehicle 2 is, for example, a motor vehicle, such as a passenger car, a truck, a bus and/or a motorcycle. The external processing device 3 can be, for example, a server, a cloud server and/or a backend. The external processing device 3 can alternatively be referred to as a computer that is located outside of the vehicle 2. The external processing device 3 may be located in another vehicle 2.

The vehicle 2 comprises a positioning device 4. The positioning device 4 may perform a positioning of the vehicle 2 based on data provided by a global navigation satellite system (GNSS) 5. The GNSS 5 may be, for example, the global positioning system (GPS) or any other GNSS 5. Thus, the vehicle can determine its own position by means of the positioning device 4. It is possible that the vehicle 2 comprises no navigation system and/or stored map. The vehicle 2 comprises a processing unit 6 such as, for example, an on-board computer. Furthermore, the vehicle 2 comprises a communication interface 7.

The external processing device 3 also comprises the communication interface 7. The communication interfaces 7 of the vehicle 2 and the external processing device 3 may be connected by a communication connection 8. The communication connection 8 is preferably a wireless and cable-free connection. Via the communication connection 8, data or other information are exchangeable between the vehicle 2 and the external processing device 3.

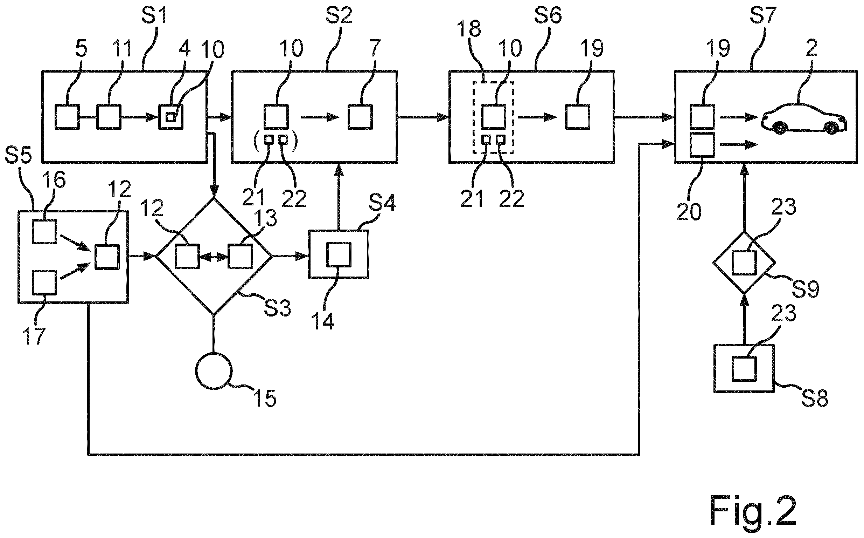

Fig. 2 shows a method to provide an estimated future position of the vehicle 2. In a first step S1, a position information 10 is determined. The position information 10 describes a current and/or previous position of the vehicle 2. The position information may be determined by means of the positioning device 4 of the vehicle 2. This comprises determining the position information 10 based on GNSS data 11 provided by the GNSS 5 for the positioning device 4 of the vehicle 2. Alternatively or additionally, another vehicle 2 may determine the position information 10. Then, the other vehicle 2 may determine the position of the vehicle 2, for example, based on sensor data captured by the other vehicle 2.

A step S2 comprises providing the at least one position information 10 for the external processing device 3. This may involve sending the position information 10 to the external processing device 3 via the communication connection 8. It is possible that the at least one position information 10 is provided regularly. In particular, it is provided in a predetermined time and/or distance interval.

Alternatively or additionally, the position information 10 is provided request-based. In this case, the method comprises additional steps S3 and S4. In step S3, a quality information 12 is checked. Thereby it is verified whether the quality information is beyond a quality information range 13 or not. The quality information 12 describes a quality of the provided at least one position information 10. The vehicle 2, in particular the processing unit 6, preferably performs this step before the position information 10 is provided. If the quality information 12 is beyond the quality information range 13, a request information 14 is provided in a step S4. The request information 14 describes a request for determining a future position of the vehicle 2 in a step S6. If the quality information 12 is within the quality information range 13, a termination 15 of the method may occur.

In a step S5, the quality information 12 is determine based on a GNSS data coverage 16 and/or a performance 17 of a vehicle-internal future position estimation performed by the processing unit 6 of the vehicle 2. The herby determined quality information 12 is further evaluated in step S3 as describe above.

In step S6, at least one future position information 19 is determined by the external processing device 3. This is done by applying a position determination algorithm 18 on the provided at least one position information 10. The future position information 19 describes the estimated future position of the vehicle 2. The position determination algorithm 18 comprises map matching of the provided at least one position information 10 and determining a most probably vehicle path of the vehicle 2 under consideration of the map matching and a most probable path technique or algorithm. Step S6 is preferably based on known techniques of how to estimate a possible future position information 19 based on a provided actual position information 10 of the vehicle 2.

A step S7 comprises providing that determined at least one future position information 19 for the vehicle 2. The determined future position information 19 is in particular transmitted from the external processing device 3 to the vehicle 2 via the communication connection 8. It is additionally possible to provide a speed limit information 20 for the vehicle 2. The speed limit information 20 describes a speed limit at the estimated future position. The at least one future position information 19 and the speed limit information 20 can be provided simultaneously, for example, in a common data package.

Preferably, the external processing device 3 provides multiple future position information 19 for the vehicle 2. A number of provided future position information 19 per distance can depend on the quality information 12. The multiple future position information 19 for the vehicle 2 are distributed over a predetermined distance, for example, five such information per kilometer and/or can describe an estimated future trajectory of the vehicle 2. For example, the external processing device 3 may model and provide a complete future trajectory for the vehicle 2.

In a step S8, the external processing device 3 may determine, if a speed limit change 23 occurs at a position according to the at least one future position information 19 wherein the speed limit change refers to a change in speed limit compared to the speed limit at the position according to the provided position information 10. In step S8, the speed limit change 23 is determined, meaning that, for example, a corresponding speed limit change information is determined. Afterwards in a step S9, it is checked if the speed limit change 23 occurs. If this is the case, the at least one future position information 19 is only provided at the position of the speed limit change 23 and/or at a predefined distance to the position of the speed limit change 23. This may result in relatively sporadic providing of the determined future position information 19 due to its dependence on speed limit changes 23.

Besides, the vehicle 2 may provide a speed information 21 and a direction information 22 to the external processing device 3 in step S2, for example, so that the speed information 21 and/or the direction information 22 can be considered by determining the at least one future position information 19 in step S6. The speed information 21 describes a current and/or previous speed of the vehicle 2. The direction information 22 describes a current and/or previous driving direction of the vehicle 2.

In summary, the invention provides a cloud-based or a server-based solution to provide possible future positions of the vehicle 2 in order to improve position determination by an on-board positioning device 4 and, for example, a dead-reckoning solution performed within the vehicle 2. The idea is that the vehicle 2 sends regularly or event-based its last known position or positions to the external processing device 3. The external processing device 3, which can be alternatively referred to as map server, performs a map matching of the current vehicle positions and determines the next position of the vehicle 2 using the most probable path technique. This is achieved by applying the position determination algorithm 18 to determine the future position information 19. The future position information 19 describes the most probably vehicle path and the estimated heading of the vehicle 2 based on road geometry between the individual future positions. The distance between the future positions can be fixed or be determined by other criteria as known GNSS data coverage 16 or GNSS data quality. The vehicle integrates these information into its position and dead-reckoning algorithm to enhance the position determination accuracy.

Providing the future position information 19 makes the system 1 robust to a possible latency in getting back the future position information 19 from the external processing device 2. The part of the vehicle 2 that provides the position information 10 can be referred to as telematic control unit.

## Claims

1. Method to provide an estimated future position of a vehicle (2) comprising:
- providing (S2) at least one position information (10), which describes a current and/or previous position of the vehicle (2), for an external processing device (3);
- determining (S6) at least one future position information (19), which describes the estimated future position of the vehicle (2), by applying a position determination algorithm (18) on the provided at least one position information (10) by means of the external processing device (3);
- providing (S7) the determined at least one future position information (19) for the vehicle (2).

2. Method according to claim 1, wherein the vehicle (2) determines (S1) the provided at least one position information (10) by means of a positioning device (4) of the vehicle (2).

3. Method according to claim 2, wherein the positioning performed by the positioning device (4) is only based on global navigation satellite system data provided by a global navigation satellite system (5).

4. Method according to any of the preceding claims, comprising providing the position information (10) regularly, in particular in predetermined time and/or distance intervals.

5. Method according to any of claims 1 to 3, comprising providing the position information (10) request-based, in particular upon detecting (S4) a request information (14) describing a request for the at least one future position information (19).

6. Method according to claim 5, comprising providing the request information (14) when a quality information (12) describing a quality of the at least one position information (10) is beyond a quality information range (13) (S3).

7. Method according to claim 3 and one of claims 5 or 6, comprising determining (S5) the quality information (12) based on a global navigation satellite system data coverage (16) and/or a performance (17) of a vehicle-internal future position estimation performed by a processing unit (6) of the vehicle (2).

8. Method according to any of claims 5 to 7, comprising providing no position information (10) for the external processing device (3) when the quality information is within the quality information range (13).

9. Method according to any of claims 5 to 8, wherein the external processing device (3) provides multiple future position information (19) for the vehicle (2), wherein a number of provided future position information (19) per distance depends on the quality information (12).

10. Method according to any of the preceding claims, wherein the external processing device (3) provides multiple future position information for the vehicle (2), which are distributed over a predetermined distance and/or describe an estimated future trajectory of the vehicle (2).

11. Method according to any of the preceding claims, wherein the position determination algorithm (18) comprises map matching of the provided at least one position information (10) and determining a most probably vehicle path of the vehicle (2) under consideration of the map matching and a most probable path technique.

12. Method according to any of the preceding claims, wherein the external processing device (3) provides a speed limit information (20) describing a speed limit at the estimated future position for the vehicle (2).

13. Method according to claim 12, wherein the external processing device (3) determines if the determined at least one future position information (19) corresponds to a position at which a speed limit change (23) occurs compared to the speed limit at the position according to the provided position information (10) (S8, S9), wherein if the speed limit change (23) is determined, the at least one future position information (19) is only provided at the position of the speed limit change (23) and/or at a predetermined distance to the position of the speed limit change (23).

14. Method according to any of the preceding claims, wherein the vehicle (2) provides a speed information (21), which describes a current and/or previous speed of the vehicle (2), and/or a direction information (22), which describes a current and/or previous driving direction of the vehicle (2), and determining the at least one future position information (19) comprises considering the provided speed information (21) and/or direction information (22).

15. System (1) to provide an estimated future position of a vehicle (2) comprising the vehicle (2) and an external processing device (3), wherein
- the vehicle (2) is configured to provide at least one position information (10), which describes a current and/or previous position of the vehicle (2), for the external processing device (3); and
- the external processing device (3) is configured to determine at least one future position information (19), which describes the estimated future position of the vehicle (2), by applying a position determination algorithm on the provided at least one position information (10) and to provide the determined at least one future position information (19) for the vehicle (2).
